# EUROPEAN PATENT APPLICATION

(11) **EP 1 220 211 A2**
(43) Date of publication of application: **03.07.2002**
(21) Application number: 01310917.8
(22) Date of filing: 28.12.2001
(51) Int. Cl.: G11B 7/09

(54) **Objective lens drive device and disk drive equipped with the objective lens drive device**

(30) Priority: 28.12.2000 JP 2000402466; 21.12.2001 JP 2001388735
(71) Applicant: Sony Computer Entertainment Inc., Tokyo 107-0052 (JP); SONY CORPORATION, Tokyo 141 (JP)
(72) Inventor: Higashihara, Teruaki, Shinagawa-ku, Tokyo 141 (JP); Sasaki, Ichiro, Kisaradu-shi, Shiba 292-0834 (JP)
(74) Representative: Pratt, Richard Wilson

(57) **Abstract**

A disk device includes a base that has a support shaft (23) and magnets (25); a movable unit (18) that is supported on the support shaft rotatably about the support shaft and slidably along the support shaft, holds an objective lens, and has a focusing coil (38) and a tracking coil (39), and magnetic members (41,42) that are formed in linear shape and are attached to the movable unit, and hold the movable unit in a neutral position in a focusing direction and in a tracking direction by attraction of the magnet members to the magnets. The device is used for receiving a disk recording medium for recording or playback by transmitting laser light through an objective lens held by the movable unit.

## Description

### FIELD OF THE INVENTION

This invention relates to an objective lens drive device and a disk device equipped therewith. More specifically, the invention relates to the field of technology where an objective lens drive device has movable unit which is supported rotatably and slidably on a support shaft, and a disk device that is equipped with the objective lens drive device.

### BACKGROUND OF THE INVENTION

There are disk devices that play signals recorded on an optical disk or other disk-shaped recording medium. Such disk devices include ones on which is provided an objective lens drive device that performs focusing adjustment and tracking adjustment with respect to the disk-shaped recording medium by operation of a movable unit that is supported on a support shaft so as to freely rotate about the shaft and freely slide along the shaft.

In an objective lens drive device, in the state in which no driving electric current is supplied to the focusing coil for focusing adjustment or to the tracking coil for tracking adjustment, it is necessary to hold the movable unit in a neutral position in the focusing direction and in the tracking direction. Thus there are objective lens drive devices that are constituted in such a way that, for example, a pair of bipolarly magnetized magnets for focusing and a pair of magnets for tracking are arranged on a fixed part, and four iron pieces corresponding to the magnets are attached to the movable unit, and in this objective lens drive device, the movable unit has been kept in the neutral position in the focusing direction and in the tracking direction by making use of the fact that these iron pieces are attracted to the middle part of the magnets.

But providing four iron pieces in this way presents the concern that it may increase the number of parts and be a factor for higher cost, and that it may also be a factor in preventing the objective lens drive device from being made smaller. There is also the problem that because each iron piece must be attached in its position with, for example, adhesion, the workability of doing so may become worse as the number of parts increases.

### SUMMARY OF THE INVENTION

The objective lens drive device of this invention comprises a base on which a support shaft is provided, that protrudes toward the optical axis direction of the objective lens, that has at least a pair of magnet attachment parts, and on which magnets are attached to said magnet attachment parts; a movable unit that is supported on the support shaft rotatably about the shaft and slidably along the shaft, and holds an objective lens, and has a focusing coil to which driving electric current is supplied during a focusing adjustment of laser light that is shined through said objective lens onto a disk-shaped recording medium, and a tracking coil to which driving electric current is supplied during a tracking adjustment of the laser light; and magnetic members that are formed in linear shape and are attached to the movable unit and which hold the movable unit in a neutral position in the focusing direction and in the tracking direction by virtue of the fact that they are attracted to said magnets.

Also, a disk device of this invention comprises an objective lens drive device that has a base on which a support shaft is provided, that protrudes toward the optical axis direction of the objective lens, that has at least a pair of magnet attachment parts, and on which magnets are attached to said magnet attachment parts; a movable unit that is supported on the support shaft rotatably about the shaft and slidably along the shaft, and holds an objective lens, and has a focusing coil to which driving electric current is supplied during focusing adjustment of laser light that is shined through said objective lens onto a disk-shaped recording medium and a tracking coil to which driving electric current is supplied during tracking adjustment of the laser light; and magnetic members that are formed in linear shape and are attached to the movable unit, and hold the movable unit in a neutral position in the focusing direction and in the tracking direction by virtue of the fact that they are attracted to said magnets. Therefore, in the objective lens drive device of this invention and a disk device that is equipped therewith, the movable unit is held in the neutral position by virtue of the fact that the magnetic members are attracted to the magnets.

### BRIEF DESCRIPTION OF THE DRAWINGS

Figure 1 is a schematic perspective view of a disk device of the present invention;
Figure 2 is a block diagrammatic view showing the composition of a disk device of the invention;
Figure 3 is an enlarged exploded side view of an objective lens drive device of the present invention;
Figure 4 is an enlarged top view of an objective lens drive device of the present invention;
Figure 5 is enlarged perspective view of a base of the drive device of Figure 3;
Figure 6 is an enlarged top view of the first member of the drive device of Figure 3;
Figure 7 is an enlarged bottom view of the first member of Figure 6;
Figure 8 is an enlarged top view of the second member of the drive device of Figure 3;
Figure 9 is a side view showing the first member and the second member separated;
Figure 10 is a front view showing the first member and the second member separated;
Figure 11 is an enlarged top view showing the state in which the first member and the second member are joined together;
Figure 12 is an enlarged side view showing the state in which the first member and the second member are joined together;
Figure 13 is an enlarged front view showing the state in which the first member and the second member are joined together;
Figure 14 is an enlarged top view of the movable unit of the drive device of Figure 3;
Figure 15 is an enlarged side view of the movable unit;

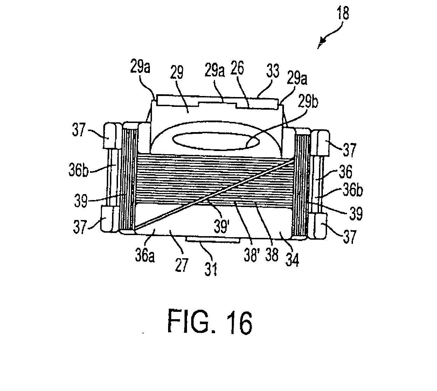

Figure 16 is an enlarged front view of the movable unit;
Figure 17 is an exploded perspective view of two magnetic members of the drive unit of the present invention;
Figure 18 is an enlarged bottom view of the movable unit;
Figure 19 is an enlarged side view showing the state in which the movable unit is supported on the base, partly in cross-section;
Figure 20 is an enlarged top view showing the objective lens drive device with the cover body attached;
Figure 21 is an enlarged side view showing the objective lens drive device with the cover body attached;
Figure 22 is an enlarged cross-sectional view along line XXII-XXII in Figure 20;
Figures 23, 24, and 25 are enlarged cross-sectional views and together show the operation of the movable unit in the focusing direction, of which Figure 23 is a cross-sectional view showing the state in which the movable unit is held in a neutral position, Figure 24 is a cross-sectional view showing the state in which the movable unit is moved toward the direction of arrow F1, and Figure 25 is a cross-sectional view showing the state in which the movable unit is moved toward the direction of arrow F2;
Figures 26, 27, and 28 are enlarged views which together show the operation of the movable unit in the tracking direction; of which Figure 26 is an enlarged top view showing the state in which the movable unit is held in the neutral position, Figure 27 is an enlarged top view showing the state in which the movable unit is moved toward the direction of arrow T1 and Figure 28 is an enlarged top view showing the state in which the movable unit is moved toward the direction of arrow T2;
Figure 29 is a graph showing the force Fz toward the focusing direction that arises in the magnetic members when the movable unit is moved toward the focusing direction;
Figure 30 is a graph showing the rotational torque Tz toward the tracking direction that arises in the magnetic members when the movable unit is moved toward the tracking direction;
Figure 31 is a diagram showing the state in which the movable unit is tilted with respect to the support shaft;
Figure 32 is a graph showing the rotational torque that arises in each part of the magnetic members if the movable unit is held in the neutral position;
Figure 33 is a graph showing the rotational torque that arises in the magnetic members when the movable unit is in each position in the focusing direction; and
Figure 34 is a table showing the properties of the materials used for the first member or the second member.

### DESCRIPTION OF THE PREFERRED EMBODIMENT

With reference to the drawings an embodiment of the invention will be described. The disk device (disk drive) of this embodiment is a device for playing (reading) signals recorded on an optical disk or other disk-shaped recording medium and/or recording (writing) signals onto a disk-shaped recording medium. The disk-shaped recording medium is, for example a CD (compact disk), CD-ROM (CD - read-only memory), CD-R (CD-recordable), CD-RW (CD-rewritable), DVD (digital versatile (or video) disk), DVD-ROM, DVD-RAM (DVD - random access memory), etc..

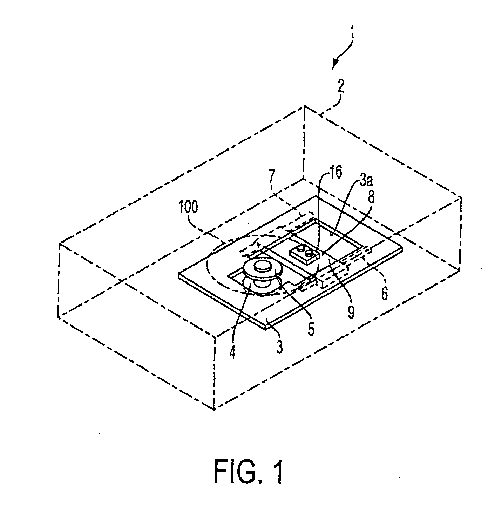

As shown in Figure 1, a disk device 1 is constituted in such a way that the prescribed members are arranged inside an outer housing 2. Arranged inside the outer housing 2 is a chassis 3, and an arrangement hole 3a is formed in the prescribed position in chassis 3. Below chassis 3 is arranged a drive motor 4, and a disk table 5 is fixed to the motor shaft of drive motor 4. Disk table 5 protrudes through arrangement hole 3a to above chassis 3.

A lead screw 6 and a guide shaft 7 are arranged in parallel on the underside of chassis 3. An optical pickup 8 is arranged in a position corresponding to arrangement hole 3a of chassis 3. This optical pickup 8 is supported so as to be able to move along the radial direction of a disk-shaped recording medium 100 mounted on disk table 5.

Optical pickup 8 is constituted in such a way that prescribed members are arranged on a moving base 9. One end of the moving base 9 makes a threaded engagement with a lead screw 6, and its other end is supported slidably on a guide shaft 7. Rotation of lead screw 6 causes the moving base 9 to move toward the radial direction of the disk-shaped recording medium 100 while being guided by guide shaft 7.

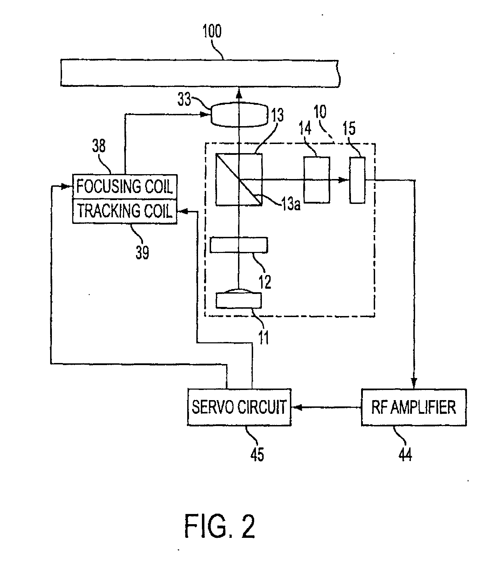

As shown in Figure 2, an optical block 10 is arranged on moving base 9. The optical block 10 consists of a semiconductor laser 11, a grating 12, a beam splitter 13, a cylindrical lens 14, a photosensor 15, etc. A beam splitter 13 has a reflecting surface 13a.

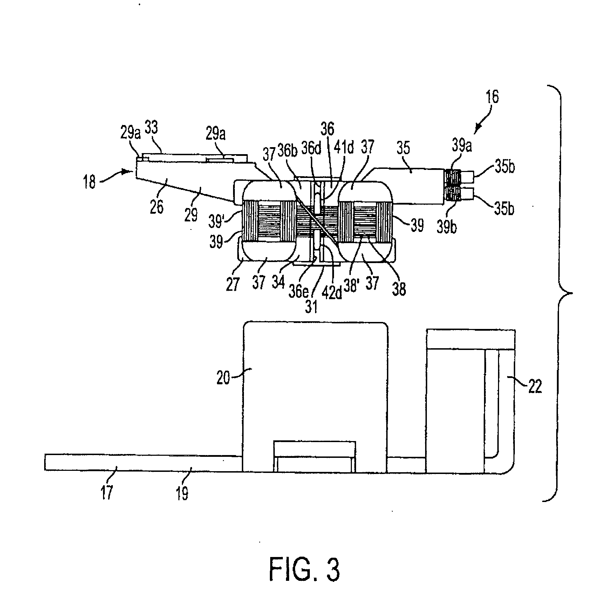

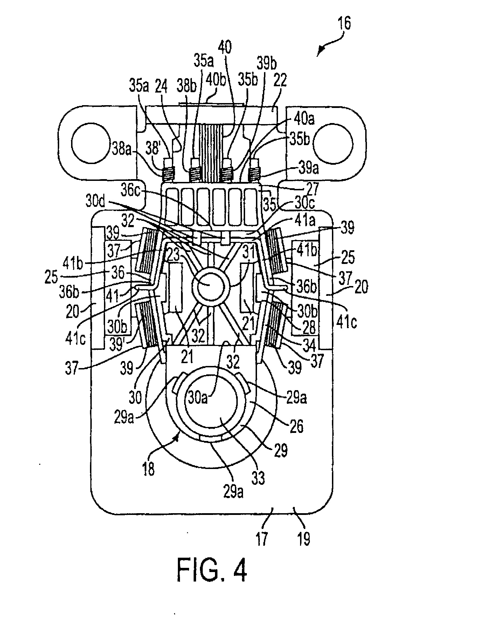

As shown in Figure 1, an objective lens drive device 16 is arranged on the moving base 9. As shown in Figures 3 and 4, an objective lens drive device 16 is constituted in such a way that moving unit 18 is supported on base 17.

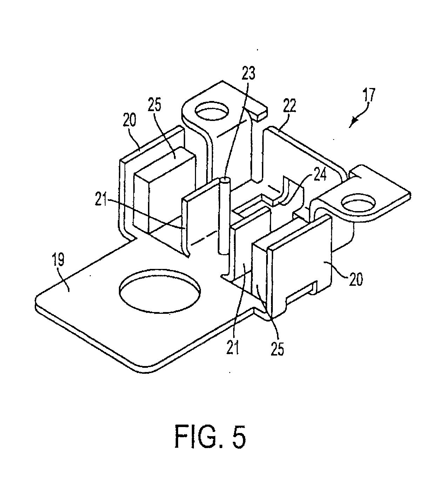

As shown in Figure 5, a base 17 has a base part 19, two outer yoke parts 20, formed each bent upwards from the two side edges of the base part 19, two inner yoke parts 21, positioned facing the outer yoke parts 20, and a baseplate attachment part 22 formed bent upwards from the rear edge of the base part 19; these parts are formed integrally without one another. An upwardly protruding support shaft 23 is provided approximately in the center of base part 19. A baseplate insertion hole 24 is formed extending from the rear end of base part 19 to the baseplate attachment part 22. Outer yoke parts 20, also operate as magnet attachment parts, and two magnets 25, each being single-pole magnetized, are affixed respectively to their inner surfaces. Magnets 25, for example, are each made to be an S pole. Also, magnets 25, are arranged so as to be mutually symmetrical with respect to the centerline of support shaft 23.

As shown in Figure 3, the movable unit 18 is constituted in such a way that a first member 26 and a second member 27 thereof are joined together.

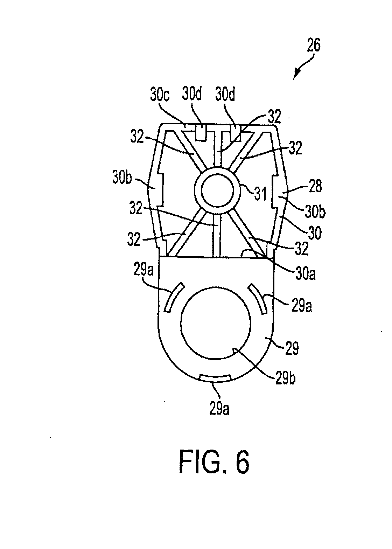

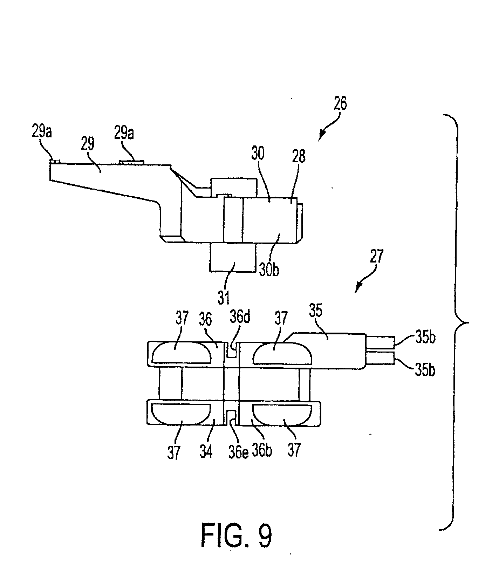

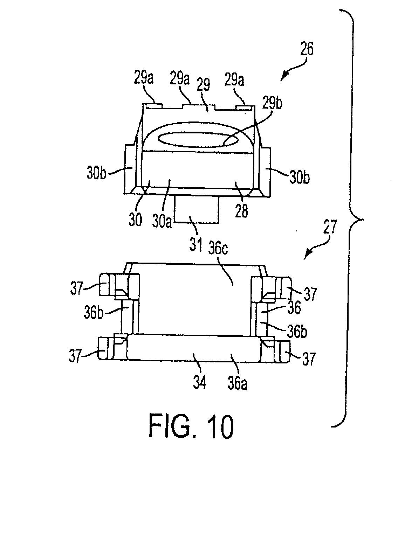

As shown in Figures 6, 7, 9, and 10, the first member 26 has a joining part 28 and a holder part 29, which protrudes from joining part 28. Joining part 28 and holder part 29 are formed integrally, for example, from liquid crystal polymer resin containing carbon fiber. As carbon fiber-containing liquid crystal polymer resin, one may use, for example, Vectra B230 (brand name of PolyPlastic Co., Ltd. in Japan).

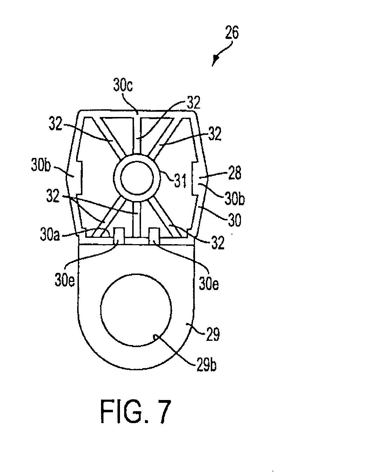

Joining part 28 has a frame part 30, which is formed roughly in the shape of a squared-off cylinder, and a supported cylinder part 31, which is positioned roughly in the middle of the frame part 30 and has a cylindrical shape. Supported cylinder part 31 is coupled to frame part 30 by multiple coupling parts 32. Frame part 30 consists of a front wall part 30a, side wall parts 30b, 30b, and a rear wall part 30c. Front wall part 30a is thinner in the up-down direction than side wall parts 30b, 30b and rear wall part 30c, and its left and right side edges are connected to the lower end part of the front edge part of side wall parts 30b, 30b. Supported cylinder part 31 is formed long in the axial direction and protrudes above and below the frame part 30. As shown in Figure 6, provided on the upper edge of rear wall part 30c of frame part 30 are two pressing pieces 30d, which are separated from each other and protrude toward the front. As shown in Figure 7, provided on the lower edge of front wall part 30a of frame part 30 are two pressing pieces 30e, which are separated from each other and protrude toward the rear.

As shown in Figures 6, 9, and 10, provided on the upper surface of holder part 29 are positioning pieces 29a, 29a, 29a, which are separated from each other along the circumference and form circular arc shapes. As shown in Figures 6 and 7, a through-hole 29b is formed in the part that is surrounded by positioning pieces 29a, 29a, 29a. An objective lens 33 is positioned on holder part 29 by positioning pieces 29a, 29a, 29a and is held in place by, for example, adhesion.

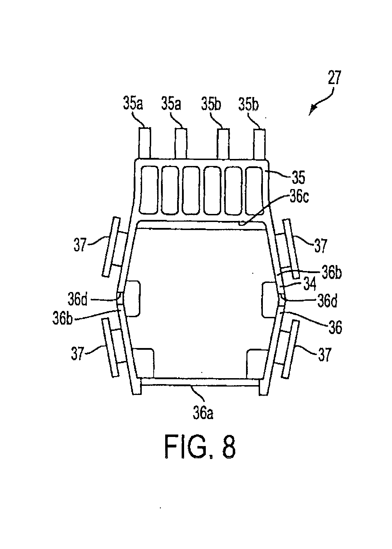

As shown in Figures 8 through 10, the second member 27 has a coil bobbin part 34 and a protruding part 35, which protrudes rearwards from the upper edge of coil bobbin part 34. The parts of second member 27 are formed integrally with one another with, for example, a resin that contains glass fiber and has no conductivity. As this glass-fiber-containing resin, one may use, for example, Zaider RC-210 (brand name of Nippon Oil Co., Ltd. in Japan), or Sumika Super E5008, Sumika Super E5008L, Sumika Super E5006L, or Sumika Super E5002L (brand names of Sumitomo Chemical Co., Ltd. in Japan).

Coil bobbin part 34 consists of a frame shaped part 36, which has a roughly squared-off cylinder shape, and multiple coil wind-around parts 37 provided on the outer surface of the frame shape part 36. Frame shape part 36 consists of a front wall part 36a, two side wall parts 36b, and a rear wall part 36c. Four coil wind-around parts 37 are provided, each on a side surface of the frame shaped part 36, separated up, down, front, and rear. Formed in the middle of side wall parts 36b, 36b of frame shaped part 36 in the front-rear direction on the upper edge and lower edge, are, respectively, two pairs of support slits 36d, 36d and 36e, 36e.

Provided on the rear surface of protruding part 35, and separated from each other are four rearward-protruding end wind-around parts (end attachment parts) 35a, 35a, 35b, 35b. As shown in Figures 3 and 4, the two end wind-around parts 35a, 35a positioned on the left side are for the focusing coil, and are attached by end parts 38a, 38b of a coil wire 38' for a focusing coil 38 being wound around them, respectively. The other two end wind-around parts 35b, 35b positioned on the right side are for a tracking coil, and are attached by end parts 39a, 39b of a coil wire 39' for a tracking coil 39 being wound around them, respectively. End wind-around parts 35a, 35b extending toward the center are positioned a little below the end wind-around parts 35a, 35b that are positioned on either side of them.

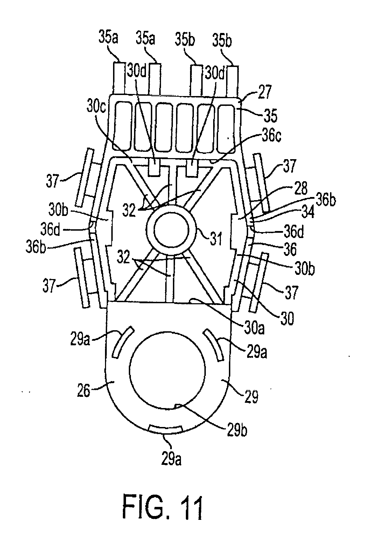

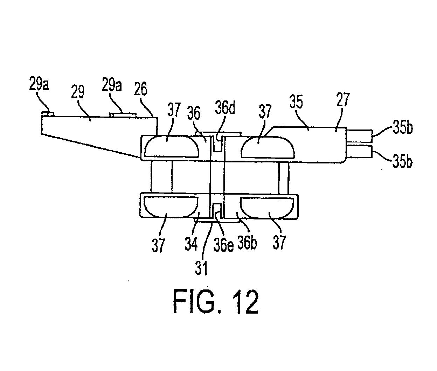

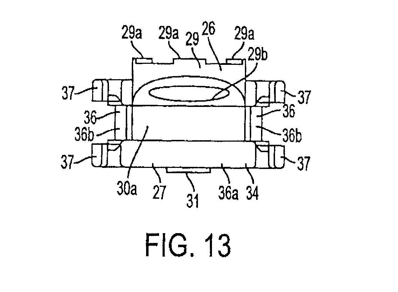

As shown in Figures 11 through 13, first member 26 and second member 27 are joined together by, for example, being glued together using a thermosetting adhesive. In the state in which the first member 26 and second member 27 are joined together, the frame part 30 of first member 26 is positioned in a state in which it is fitted into the frame shape part 36 of second member 27. Therefore, the holder part 29 of first member 26 protrudes forward from second member 27, and the protruding part 35 of second member 27 protrudes rearward from first member 26.

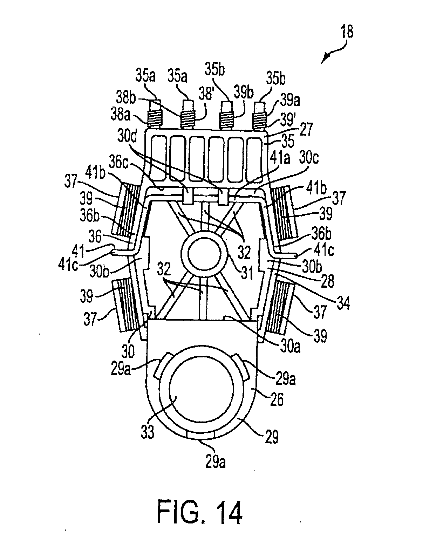

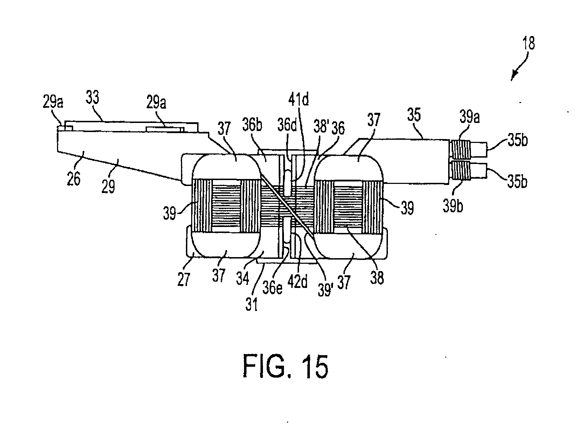

As shown in Figures 14 and 15, an end part 35a of coil wire 38' is wound around one end wind-around part 35a, then it is wound around the middle part of frame shape part 36 in the up-down direction and the focusing coil 38 is formed, and finally its end part 38b is wound around the other end wind-around part 35a. With regard to coil wire 39', its end part 39a is wound around one end wind-around part 35b, then it is wound around so as to bridge a pair of coil wind-around parts 37. The winding of coil wire 39' around the pair of coil wind-around parts 37, positioned above and below is done in sequence around all four pairs of coil wind-around parts 37, and in this way four tracking coils 39, are formed. Finally, the end part 39b is wound around the other end wind-around part 35b.

End wind-around parts 35a, 35a, 35b, 35b around which end parts 38a, 38b, 39a, 39b are wound are dipped in a solder tank filled with solder before it has hardened, and in this way the end parts 38a, 38b, 39a, 39b are dip-soldered. As shown in Figure 4, terminals provided on one end 40a of a flexible printed circuit board 40 are connected to corresponding dip-soldered end parts 38a, 38b, 39a, 39b.

As shown in Figures 3, 4, 17, 18, and 19, magnetic members 41, 42 formed in wire shape from a magnetic metal material (for example, a ferromagnetic material) are attached to the movable unit 18. Magnetic members 41, 42 act as a spring that generates a repelling force when elastically deformed, and they are attached to movable unit 18 using this repelling force. Also, magnetic members 41, 42 may be formed in the shape of a flat spring.

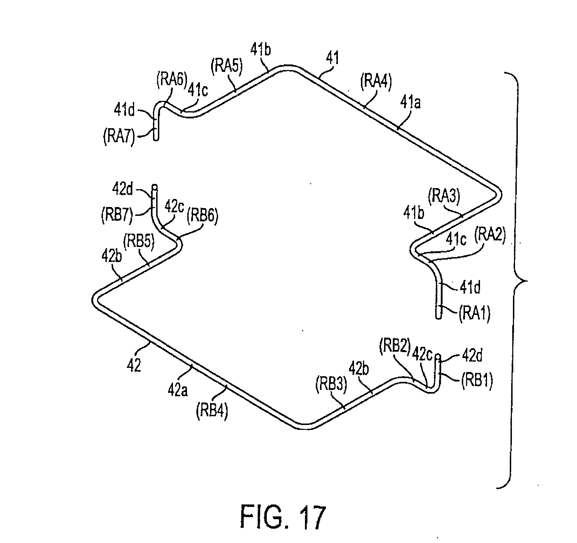

As shown in Figure 17, magnetic member 41 is constituted in such a way that it produces a base part 41a, which is long in the left-right direction, spring parts 41b, 41b, which protrude roughly forward from both ends of the base part 41a; supported parts 41c, 41c, which protrude in mutually opposite directions from the front end of the spring parts 41b, 41b, and magnet-facing parts 41d, 41d, which each protrude downward from the outside end of said supported parts 41c, 41c, are formed integrally with each other. Magnetic member 42 is constituted in such a way that base part 42a, which is long in the left-right direction; spring parts 42b, 42b, which protrude roughly rearward from both ends of said base part 42a; supported parts 42c, 42c, which protrude in mutually opposite directions from the rear end of said spring parts 42b, 42b; and magnet-facing parts 42d, 42d, which each protrude upward from the outside end of said supported parts 42c, 42c, are formed integrally with each other.

As shown in Figures 3 and 4, magnetic member 41 is supported by movable unit 18 because the roughly middle part of base part 41a is pressed upward by pressing pieces 30d, 30d of first member 26, spring parts 41b, 41b are elastically brought into contact with the inside surface of the rear half of side wall parts 36b, of second member 27, respectively, and supported parts 41c, 41c are inserted into support slits 36d, 36d of second member 27, respectively. Therefore magnet-facing parts 41d, are put into the state in which they protrude from movable unit 18.

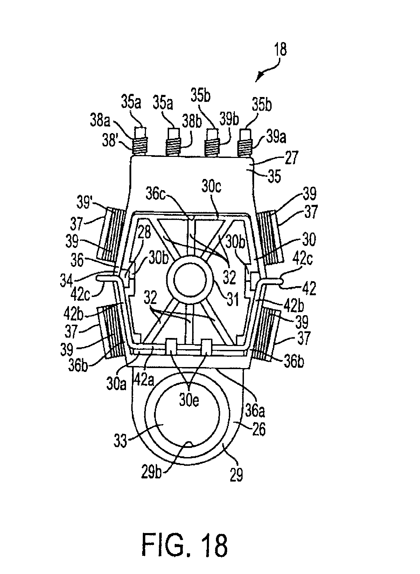

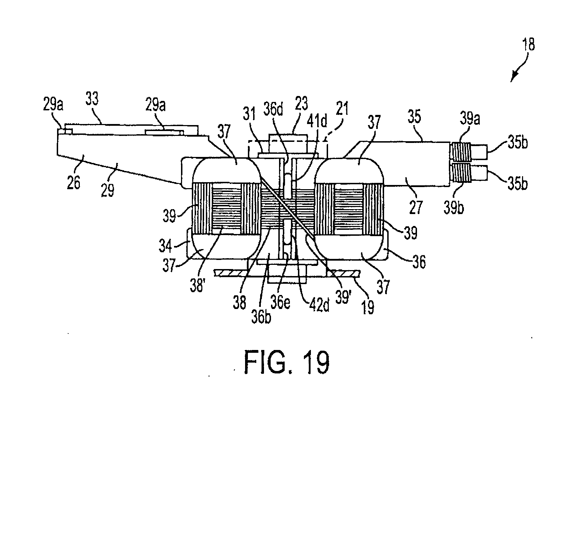

As shown in Figure 18 and Figure 19, magnetic member 42 is supported by movable unit 18 because the roughly middle part of base part 42a is pressed downward by two pressing pieces 30e, of first member 26, two spring parts 42b, are elastically brought into contact with the inside surface of the front half of two side wall parts 36b, of second member 27, respectively, and two supported parts 42c, are inserted into two support slits 36e, of second member 27, respectively. Therefore two magnet-facing parts 42d, are put into the state in which they protrude from movable unit 18. These two magnet-facing parts 42d, and two magnet-facing parts 41d, of magnetic member 41 are positioned apart from each other and one above the other.

As stated above, two pairs of spring parts 41b and 42b, are provided on magnetic members 41, 42, respectively, which pairs of spring parts 41b and 42b, are elastically brought into contact with the inside surface of two side wall parts 36b. Because of this, positioning of magnetic members 41, 42 with respect to movable unit 18 can be done very easily, and therefore the two pairs of magnet-facing parts 41d and 42d, are properly positioned with respect to movable unit 18.

In attaching magnetic members 41, 42 to movable unit 18, it suffices if the base part 41a or the base part 42a engages with pressing parts 30d, 30d or pressing parts 30e, 30e, spring parts 41b, 41b or spring parts 42b, 42b are elastically brought into contact with the inside surface of side wall parts 36b, 36b, and supported parts 41c, 41c or supported parts 42c, 42c are inserted into support slits 36d, 36d or support slits 36e, 36e. Because of this, attachment of magnetic members 41 and 42 to movable unit 18 can be done very easily. Also, in order to ensure the reliable attachment of magnetic members 41, 42 to movable unit 18, as stated above, in the state in which magnetic members 41, 42 are attached to movable unit 18, it suffices to fix magnetic members 41, 42 to movable unit 18 by adhesion.

As shown in Figure 4, by support shaft 23 of base 17 being inserted into supported cylinder part 31, the movable unit 18 is supported on support shaft 23, slidably along the shaft and rotatably about the shaft. The axial direction of support shaft 23 is the focusing direction along which focusing adjustment is done with respect to disk-shaped recording medium 100, and the rotational direction of support shaft 23 is the tracking direction along which tracking adjustment is done with respect to disk-shaped recording medium 100.

As shown in Figures 3 and 4, in the state in which the movable unit 18 is supported by support shaft 23, two magnets 25, are positioned opposite and directly outside the magnet-facing parts 41d, 41d, 42d, 42d respectively of magnetic members 41, 42, and two inner yoke parts 21, of base 17 are positioned directly inside respective of side wall parts 30b, of frame part 30 of first member 26.

As shown in Figure 4 terminals provided on one end 40a of flexible printed circuit board 40 are connected to terminal parts 38a, 38b, 39a, 39b of coil wire 38' or coil wire 39', and the other end 40b of the flexible print circuit board 40 is glued to the outside surface of baseplate attachment part 22 of base 17. Terminals that are connected to a power source, which is not shown, are provided on the end 40b, and electricity is supplied to focusing coil 38 or tracking coil 39 via these terminals.

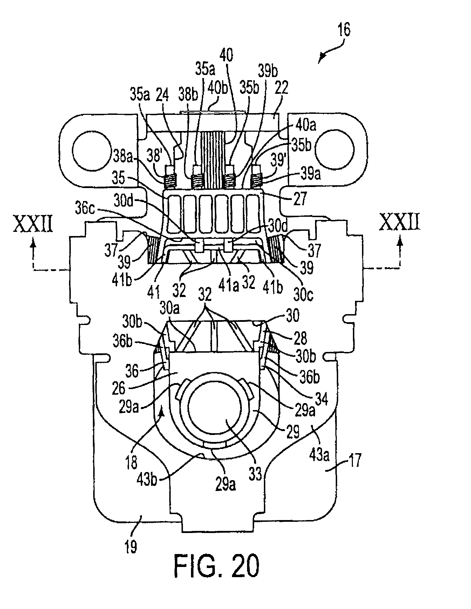

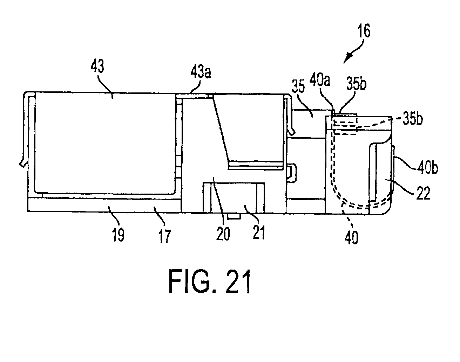

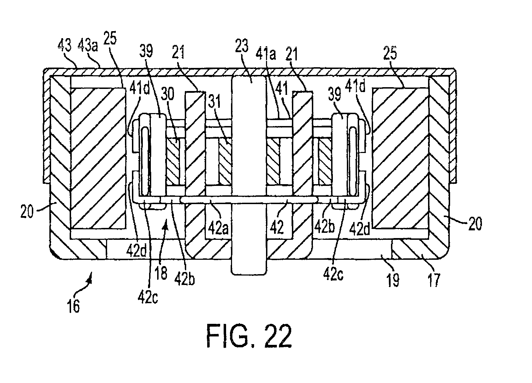

As shown in Figures 20 through 22, cover 43 is attached to base 17 so as to cover the movable unit 18. Cover 43 has a top plate part 43a in which a thru-hole 43b is formed. As shown in Figure 20, thru-hole 43b is positioned above the objective lens 33 of movable unit 18, which is supported on support shaft 23, and it is made part of the path of the laser light that shines onto disk-shaped recording medium 100 through the objective lens 33.

The operation of the disk device 1 is as described as follows.

As shown in Figure 1, when disk-shaped recording medium 100 is mounted on the disk table 5 and the play switch (not shown), is operated, the drive motor 4 is driven, and disk-shaped recording medium 100 on disk table 5 is rotated. As shown in Figure 2, when disk-shaped recording medium 100 is rotated, laser light is emitted from semiconductor laser 11. This laser light is divided by a grating 12 into three types of diffracted light -- 0-order light, +1-order light, and -1-order light -- and is shined through the beam splitter 13 and the objective lens 33 onto the signal recording surface (recording layer) of disk-shaped recording medium 100.

The laser light that is emitted onto the signal recording surface of disk-shaped recording medium 100 is reflected by said signal recording surface and is transmitted into beam splitter 13 as returned laser light. This returned laser light is further reflected by reflecting surface 13a of beam splitter 13 and is transmitted into cylindrical lens 14. Astigmatism is generated by the cylindrical lens 14, then the returned laser light travels into photosensor 15. The incident laser light undergoes optical-electric conversion in a photosensor 15, and the electrical signal that is obtained as a result is transmitted to RF (radio frequency) amplifier 44. An RF signal is generated in RF amplifier 44, and a focusing error signal and tracking error signal are generated. The RF signal is input into a signal processing circuit, which is not shown, and the focusing error signal and tracking error signal are input into a servo circuit 45.

Based on the focusing error signal from RF amplifier 44, the servo circuit 45 generates a focusing signal such that the value of said focusing error signal becomes "0". Based on this focusing servo signal, current is supplied to focusing coil 38, and focusing adjustment is done by the objective lens drive device 16 (see Figure 1). Also, based on the tracking error signal from RF amplifier 44, servo circuit 45 generates a tracking signal such that the value of the said tracking error signal becomes "0". Based on this tracking servo signal, current is supplied to tracking coil 39, and tracking adjustment is executed by objective lens drive device 16.

As shown in Figures 2 and 19, during the focusing adjustment, movable unit 18 is operated in the axial direction of support shaft 23 in such a way that the spot of laser light traveling through objective lens 33 is focused onto the signal recording surface of disk-shaped recording medium 100. During tracking adjustment, movable unit 18 is operated in the rotational direction of support shaft 23 in such a way that the spot of laser light traveled through objective lens 33 is focused onto the prescribed position on the signal recording surface of the disk-shaped recording medium 100.

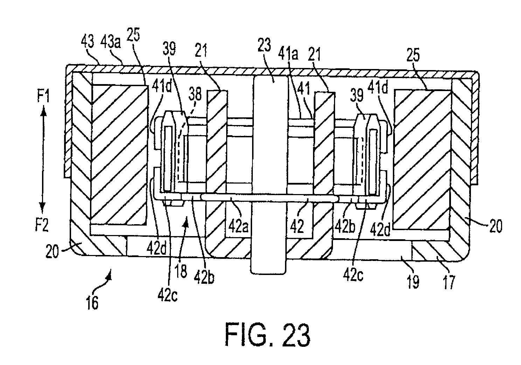

With reference to Figures 23 through 25, the operation of movable unit 18 in the focusing direction is as follows.

Figure 23 shows the state in which movable unit 18 is held in neutral position. At this time, movable unit 18 is held in neutral position in the focusing direction because magnet-facing parts 41d, 41d, 42d, 42d of magnetic members 41, 42 are attracted toward magnets 25, 25, and the ends of magnet-facing parts 41d, 41d, 42d, 42d are positioned in the middle of the magnetic flux.

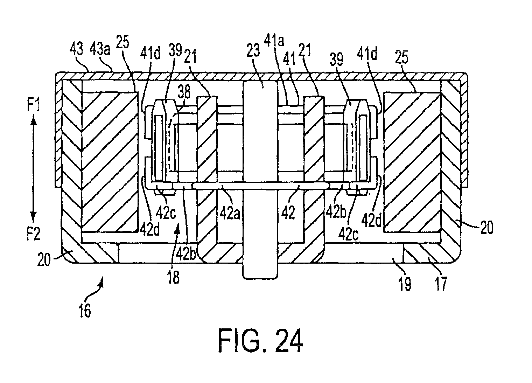

Figure 24 shows the state in which focusing adjustment is executed and movable unit 18 is moved toward the direction of arrow F1. When current of the orientation to move the movable unit 18 towards the direction of arrow F1 is supplied to focusing coil 38, the movable unit 18 is moved from the neutral position in the direction of arrow F1. At this time, a force is produced and movable unit 18 in the direction of arrow F2 that causes magnet-facing parts 41d, 41d, 42d, 42d to be attracted to the center of the magnetic flux generated from two magnets 25, so that if the supply of current to focusing coil 38 (current for causing the movable unit 18 to move in the direction of arrow F2) is stopped, the movable unit 18 once again returns to the neutral position.

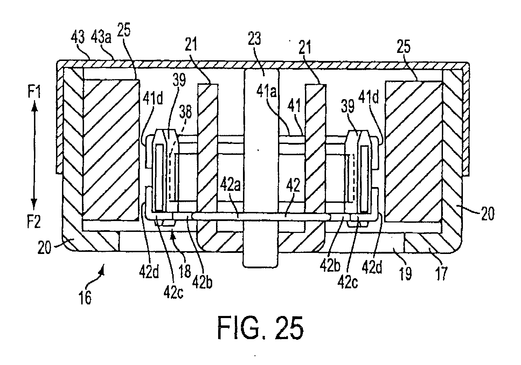

Figure 25 shows the state in which focusing adjustment is executed and movable unit 18 is moved in the direction of arrow F2. When an electric current of an orientation by which the movable unit 18 moves towards the direction of arrow F2 is supplied to forming coil 38, movable unit 18 is moved from the neutral position in the direction of arrow F2. At this time, a force is produced in movable unit 18 towards the direction of arrow F2 that causes magnet-facing parts 41d, 41d, 42d, 42d to be attracted to the center of the magnetic flux generated from two magnets 25, so that if the supply of current to focusing coil 38 (current for causing movable unit 18 to move toward the F2 direction) is stopped, the movable unit 18 once again returns to the neutral position.

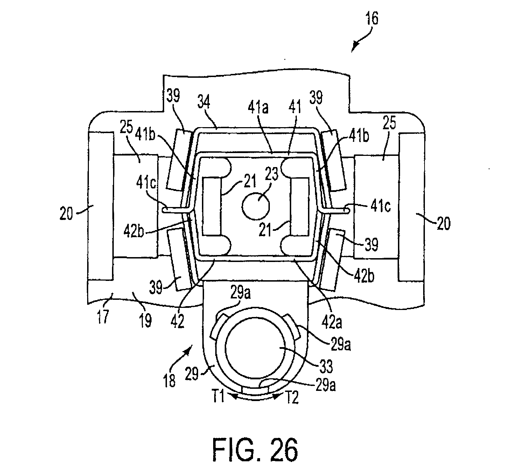

With reference to Figures 26 through 28, the operation of movable unit 18 in the tracking direction is as follows.

Figure 26 shows the state in which movable unit 18 is held in neutral position. At this time, movable unit 18 is held in neutral position in the tracking direction by virtue of the fact that magnet-facing parts 41d, 41d, 42d, 42d of magnetic members 41, 42 are attracted toward two magnets 25, and the ends of magnet-facing parts 41d, 41d, 42d, 42d are positioned in the middle of the magnetic flux.

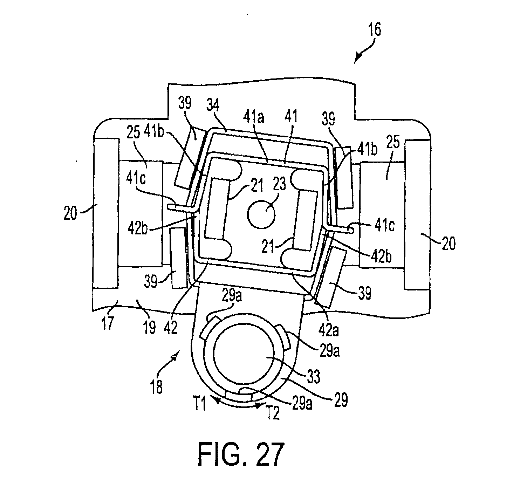

Figure 27 shows the state in which tracking adjustment is executed and movable unit 18 is moved (rotated) in the direction of arrow T1. When current of the orientation by which the movable unit 18 moves towards the direction of arrow T1, supplied to each tracking coil 39, the movable unit 18 is moved from the neutral position toward the T1 direction. At this time, a force is generated in movable unit 18 toward the T2 direction that causes magnet-facing parts 41d, 41d, 42d, 42d to be attracted to the center of the magnetic flux generated from two magnets 25, so that if the supply of current to tracking coil 39 (current for causing movable unit 18 to move towards the T1 direction) is stopped, the movable unit 18 once again returns to the neutral position.

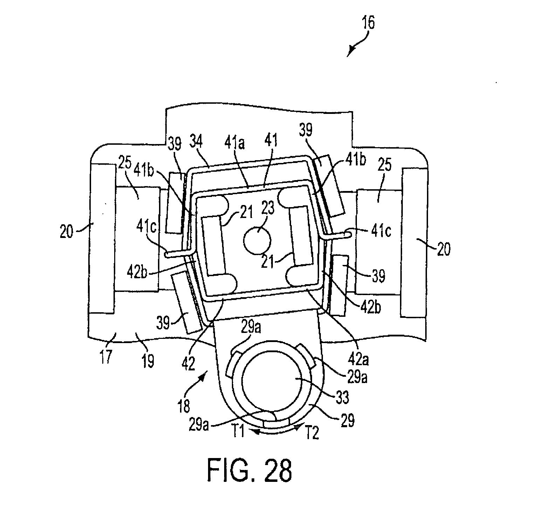

Figure 28 shows the state in which tracking adjustment is executed and movable unit 18 is moved towards the T2 direction. When current of the orientation by which movable unit 18 moves in the direction of arrow T2 is supplied to each tracking coil 39, movable unit 18 is moved from the neutral position toward the T2 direction. At this time, a force arises in movable unit 18 toward the T1 direction that causes magnet-facing parts 41d, 41d, 42d, 42d to be attracted to the center of the magnetic flux that is generated from magnets 25, 25, so that if the supply of current to tracking coil 39 (current for causing movable unit 18 to move towards the T2 direction) is stopped, movable unit 18 once again returns to the neutral position.

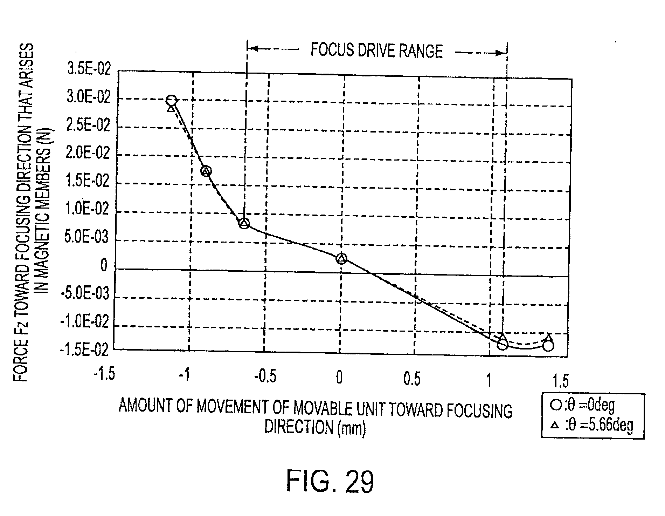

Figure 29 is a graph showing the force F2 that is generated in magnetic members 41,42 when movable unit 18 is moved towards the focusing direction, because the magnet-facing parts 41d, 41d, 42d, 42d are attracted to the center of the magnetic flux that is produced from magnets 25, 25.

In this graph, the vertical axis is for the force F2 that is generated in magnetic members 41, 42; the side above the origin represents force in the F1 (+) direction shown in Figures 23 through 25, and the side below the origin represents force in the F2 (-) direction shown in Figures 23 through 25. The horizontal axis is for the position of movable unit 18 in the focusing direction; the side to the left of the origin represents the position in the F2 (-) direction taking the neutral position as the standard, and the side to the right of the origin represents the position in the F1 (+) direction taking the neutral position as the standard. The "Focus drive range" in the diagram indicates the range through which movable unit 18 normally is moved in the focusing direction.

Also, in the graph, the plot indicated by the circles "○" is data in the state in which movable unit 18 is in neutral position in the tracking direction, and the plot indicated by the triangles "?" is data in the state in which movable unit 18 is positioned rotated 5.66° (degrees) from the neutral position in the tracking direction.

As shown in Figure 29, in objective lens drive device 16, if movable unit 18 is moved from neutral position in the focusing direction, a force to move toward neutral position is produced in movable unit 18, so that when no focusing adjustment is done, movable unit 18 is held in the neutral position in the focusing direction.

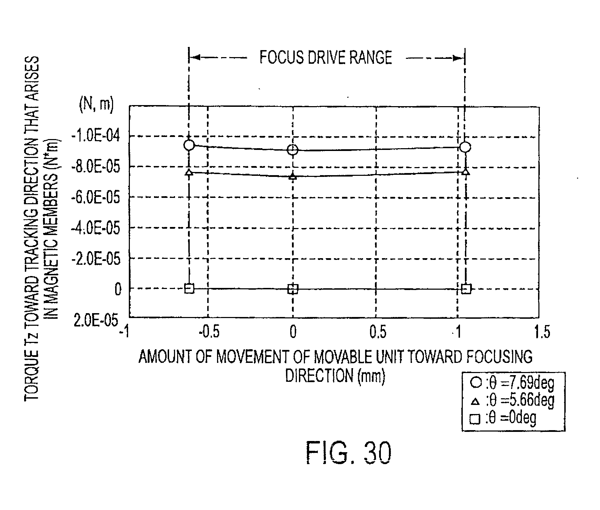

Figure 30 is a graph showing the rotational torque T2 that arises in magnetic members 41,42 when movable unit 18 is rotated towards the tracking direction, by attraction of facing parts 41d, 41d, 42d, 42d, to the center of the magnetic flux that is generated from two magnets 25.

In this graph, the vertical axis is for the rotational torque Tz that arises in magnetic members 41, 42; the side above the origin represents rotational torque in the T1 (-) direction shown in Figures 26 through 28, and the side below the origin represents rotational torque in the T2 (+) direction shown in Figures 26 through 28. The horizontal axis is for the position of movable unit 18 in the focusing direction; the side to the left of the origin represents the position in the F2 (-) direction taking the neutral position as the standard, and the side to the right of the origin represents the position in the F1 (+) direction taking the neutral position as the standard. The "Focus drive range" in the diagram indicates the range through which movable unit 18 normally is moved in the focusing direction.

Also, in the graph, the plot indicated by the circles "○" is data in the state in which movable unit 18 is positioned rotated 7.69° (degrees) from neutral position in the tracking direction (the T2 direction), the plot indicated by the triangles "Δ" is data in the state in which movable unit 18 is positioned rotated 5.66° (degrees) from neutral position in the tracking direction (the T2 direction), and the plot indicated by the squares "□" is data in the state in which movable unit 18 is in the neutral position in the tracking direction.

As shown in this Figure 30, in objective lens drive device 16, if the movable unit 18 is moved from the neutral position in the tracking direction, a rotational force to move toward neutral position arises in said movable unit 18, so when no tracking adjustment is done, the movable unit 18 is held in the neutral position in the tracking direction.

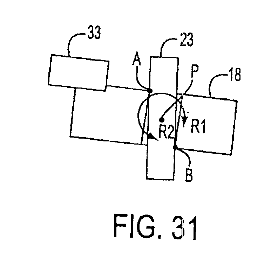

In objective lens drive device 16, by the positional relationship between the parts of magnetic members 41, 42 and magnets 25, 25, it is achieved that movable unit 18 is subject at all times to a rotational torque in an orientation that tilts with respect to support shaft 23 in the R1 direction shown in Figure 31. That is, a torque that tries to rotate movable unit 18 in the R1 direction is obtained by determining the positional relationships such that magnet members 41, 42 are asymmetrical with respect to a virtual plane that is perpendicular to the support shaft 23 and magnets 25, are symmetrical with respect to the plane of symmetry. Such positional relationships are realized by arranging magnetic members 41, 42 so as to sandwich the support shaft 23 between them in the tilt direction.

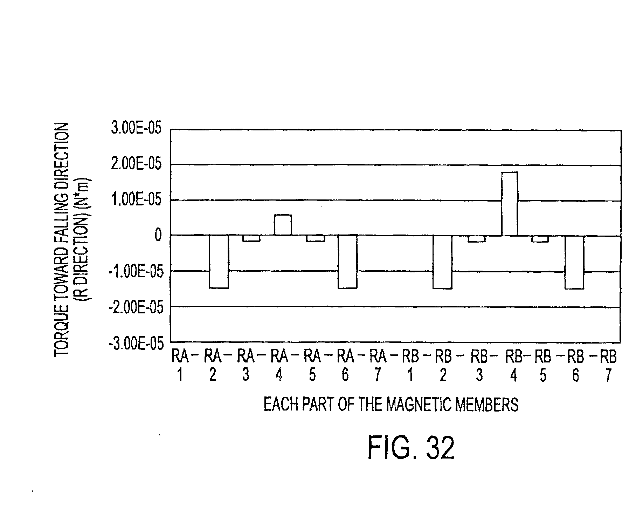

Figure 32 shows the rotational torque in the R1 or R2 direction that is generated in each part of magnetic members 41, 42 if the movable unit 18 is held in the neutral position. In this graph, the vertical axis is for the rotational torque that is produced in the R1 or R2 direction shown in Figure 31; the side above the origin represents rotational torque in the R2 (+) direction, and the side below the origin represents rotational torque in the R1 (-) direction. The horizontal axis is for the parts of magnetic members 41, 42; the symbols (RA1 through RA7 and RB1 through RB7) indicate the parts of magnetic members 41, 42 shown in Figure 17.

As seen from Figure 32, when the rotational torque in the R1 (-) direction and the rotational torque in the R2 (+) direction are added together, the rotational torque in the R1 (-) direction is greater than the rotational torque in the R2 (+) direction. Therefore it is clear that movable unit 18 held in the neutral position is subject at all times to a rotational torque of an orientation that tilts in the R1 direction with respect to the support shaft 23.

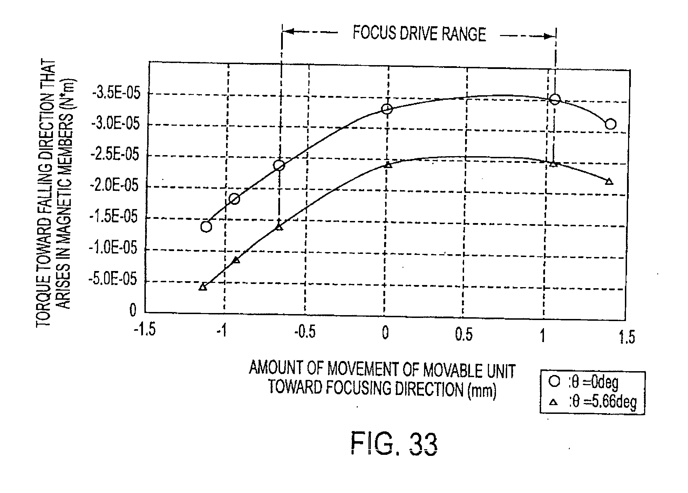

Figure 33 is a graph showing the rotational torque in the R direction that is generated in magnetic members 41, 42 when the movable unit 18 is in each position in the focusing direction. In this graph, the vertical axis represents rotational torque in the R (-) direction that arises in magnetic members 41, 42. The horizontal axis is for the position of the movable unit 18 in the focusing direction; the side to the left of the origin represents the position in the F2 (-) direction shown in Figures 23 through 25, taking the neutral position as the standard, and the side to the right of the origin represents the position in the F1 (+) direction shown in Figures 23 through 25, taking the neutral position as the standard. The "Focus drive range" in the diagram indicates the range through which movable unit 18 is normally moved in the focusing direction.

Also, in the graph, the plot indicated by the circles "○" is data in the state in which movable unit 18 is in neutral position in the tracking direction, and the plot indicated by the triangles "Δ" is data in the state in which movable unit 18 is positioned rotated 5.66° (degrees) from the neutral position in the tracking direction.

As shown in Figure 33, it is clear that the objective lens drive device 16, the movable unit 18 is subject at all times to rotational torque in an orientation that tilts towards the R1 (-) direction with respect to the support shaft 23. Therefore the movable unit 18 will be tilted in a certain direction with respect to support shaft 23, and therefore the support shaft 23 and the movable unit 18 will make contact at points A and B, as shown in Figure 31. In this case, center P of the load on support shaft 23 (one point in the axial center of support shaft 23) and the drive center of movable unit 18 will draw nearer, and thus the stable operation of movable unit 18 can be ensured at all times.

Also, movable unit 18 is subject to other torques, including a rotational torque in the R direction due to its own weight and a torque in the R direction due to, for example, flexible printed circuit board 40 being connected, but the total torque from adding the rotational torque in the R1 direction that arises in magnetic members 41, 42 to these other torques results in a torque in the R1 direction. Therefore the movable unit 18 is subject at all times to a rotational force in an orientation tilting toward the R1 direction with respect to support shaft 23, even in a device in which the rotational torque due to its own weight readily varies according to the orientation when in use, in particular in a portable disk device. Because of this, the stable operation of movable unit 18 can be ensured.

Also, in the objective lens drive device 16, because two magnets 25, are single-pole magnetized, the stable operation can be obtained and the manufacturing cost can be reduced. And because the pair of magnetic members 41, 42 is provided on the movable unit 18, good sensitivity can be obtained, and the operation of movable unit 18 can be further optimized.

Next, the materials used for the first member 26 or second member 27 of movable unit 18 will be described.

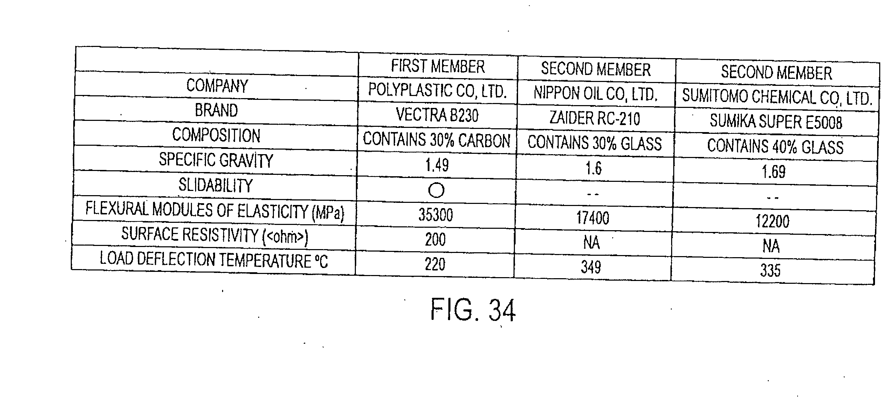

As shown in Figure 34, Vectra B230, which is the carbon fiber-containing liquid crystal polymer resin that is used for first member 26, has high slidability, a high flexural modulus of elasticity, and high rigidity as well. On the other hand, its surface resistivity shows the prescribed value (that is, has conductivity), and its load deflection temperature is low (that is, its heat resistance is low). Zaider RC-210 and Sumika Super

E5008, which are glass fiber-containing liquid crystal polymer resins used for second member 27, have a lower slidability and rigidity than Vectra B230. On the other hand, it has no conductivity, and it has greater heat resistance than Vectra 230.

In this way, the first member 26, which holds objective lens 33 and has the supported cylinder part 31, is formed from a material whose rigidity and slidability are greater than those of the second member 27, while the second member 27, around which the focusing coil 38 and tracking coil 39 are wound and which has end wind-around parts 35a, 35a, 35b, 35b, is formed from a material that is not electrically conductive and has greater heat resistance than first member 26. Therefore, in objective lens drive device 16, the operation can be optimized by high rigidity and high slidability of first member 26. In addition, because of the high heat resistance of second member 27, dip-soldering is not impeded, and because of non-conductivity, short-circuits can be prevented.

By selecting the appropriate materials such as Vectra B230 to be used for first member 26 and Zaider RC-210 or Sumika Super E5008 to be used for second member 27, a good objective lens drive device 16 can be manufactured whose operation is highly reliable, which does not impede dip-soldering, and for which there is no danger of short circuits.

Also, in the objective lens drive device 16, because focusing coil 38 and each tracking coil 39 are wound around each part of coil bobbin 34, there is no need for the work of gluing an air-core coil onto the movable unit or the work of soldering the end of each coil to the flexible printed circuit board, as there would be if the movable unit were formed by gluing on an air-core coil formed by first winding a coil wire around it. Thus the cost of manufacturing the objective lens drive device 16 can be reduced.

Also, in the foregoing, the case was described in which movable unit 18 is joined together with two members, first member 26 and second member 27, but the invention is not limited to this; the movable unit may also be formed by two-color molding. In this case, one may form, with a material that has high heat resistance or a material that has no conduction, only the part that is prescribed for winding on a coil or doing soldering. If the movable unit is formed by two-color molding, the manufacturing cost can be reduced, because, for example there is no need for the work of joining two members together.

The specific shape and structure of each part in the above embodiment showed in each case just an example of a realization in which this invention is implemented; the technical scope of this invention must not be interpreted as limited to these.

As is clear from the foregoing, the objective lens drive device of an embodiment of this invention has a base on which a support shaft is provided, that protrudes toward the optical axis direction of the objective lens, that has at least a pair of magnet attachment parts, and on which magnets are attached to the magnet attachment parts. A movable unit supported on the support shaft rotatably about the shaft and slidably along the shaft, holds an objective lens, and has a focusing coil to which driving electric current is supplied during focusing adjustment of laser light that is transmitted through the objective lens onto a disk-shaped recording medium. A tracking coil to which a driving electric current is supplied during tracking adjustment of the laser light. Magnetic members that are formed in linear shape and are attached to the movable unit hold the movable unit in the neutral position in the focusing direction and in the tracking direction by virtue of the fact that they are attracted to said magnets.

Therefore a force is produced to move the movable unit towards the neutral position whenever it is moved from the neutral position in the focusing direction or in the tracking direction. That is, the movable unit is properly held in the neutral position in the focusing direction and in the tracking direction by the minimum amount of necessary members. And the use of linearly shaped magnetic members eliminates the former need to have many iron pieces to hold the movable unit in the neutral position, and reduces the manufacturing cost by reducing the number of parts and improving work efficiency.

Moreover, in an embodiment of the invention, provided on the magnetic members are a pair of spring parts that are connected to the base part and both ends of the base part and are elastically brought into contact with both side surface parts of the movable unit. A pair of supported parts that are connected to the pair of spring parts are supported on both side surface parts of the movable unit. A pair of magnet-facing parts that are connected to said pair of supported parts are arranged so as to face the magnets.

Thus it is very easy to position the magnetic members with respect to the movable unit, and the magnet-facing parts can be properly positioned with respect to the movable unit. Also, it is very easy to attach the magnetic members to the movable unit.

Moreover, in an embodiment of the invention, because the magnetic members are arranged so that the movable unit is subject at all times to rotational torque in an orientation that tilts toward one direction with respect to the support shaft, the center of the load on the support shaft and the drive center of the movable unit approach each other, ensuring the stable operation of the movable unit at all times.

Furthermore, in an embodiment of the invention, because the magnets are single-pole magnetized, due to the simple structure, the stable operation of the objective lens drive device can be obtained and the manufacturing cost can be reduced. In an embodiment of the invention, because the pair of magnetic members are arranged on opposite sides with the support shaft between them, good sensitivity can be obtained, and the operation of the movable unit can be further optimized.

Also, the disk device of an embodiment of this invention is a disk device in which a disk-shaped recording medium mounted on a disk table is rotated by a drive motor, laser light is transmitted through an objective lens held by an objective lens drive device onto the recording surface of the rotated disk-shaped recording medium, and information signals recorded on the disk-shaped recording medium are read and played. The objective lens drive device has a base on which a support shaft is provided that protrudes toward the optical axis direction of the objective lens, that has at least a pair of magnet attachment parts, and on which magnets are attached to the magnet attachment parts. A movable unit that is supported on the support shaft rotatably about the shaft and slidably along the shaft, holds an objective lens, and has a focusing coil to which a driving electric current is supplied during a focusing adjustment of laser light that is transmitted through the objective lens onto a disk-shaped recording medium and a tracking coil to which driving electric current is supplied during a tracking adjustment of the laser light. Magnetic members that are formed in linear shape and are attached to the movable unit, and hold the movable unit in neutral position in the focusing direction and in the tracking direction by virtue of the fact that they are attracted to said magnets.

Therefore a force is produced to move the movable unit toward neutral position whenever it is moved from neutral position in the focusing direction or in the tracking direction. That is, the movable unit is properly held in the neutral position in the focusing direction and in the tracking direction by the minimum necessary members. And the use of linearly shaped magnetic members eliminates the former need to have many iron pieces to hold the movable unit in neutral position, and reduces the manufacturing cost by reducing the number of parts and improving work efficiency.

Moreover, in an embodiment of the invention, provided on the magnetic members are a pair of spring parts that are connected to the base part and both ends of said base part and are elastically brought into contact with both side surface parts of the movable unit; a pair of supported parts that are connected to said pair of spring parts and are supported on both side surface parts of the movable unit; and a pair of magnet-facing parts that are connected to said pair of supported parts and face the magnets; thus it is very easy to position the magnetic members with respect to the movable unit, and the magnet-facing parts can be properly positioned with respect to the movable unit. Also, it is very easy to attach the magnetic members to the movable unit.

Moreover, in an embodiment of the invention, because the magnetic members are arranged so that the movable unit is subject at all times to rotational torque in an orientation that tilts toward one direction with respect to the support shaft, the center of the load on the support shaft and the drive center of the movable unit approach each other, ensuring stable operation of the movable unit at all times.

Moreover, in an embodiment of the invention, because the magnets are single-pole magnetized, due to the simple structure, stable operation of the objective lens drive device can be obtained and the manufacturing cost can be reduced.

Moreover, in an embodiment of the invention, because the pair of magnetic members are arranged on opposite sides with the support shaft between them, good sensitivity can be obtained, and the operation of the movable unit can be further optimized.

## Claims

1. An objective lens drive device comprising:
an objective lens through which laser light is transmitted onto a recording surface of a disk-shaped recording medium to read and play information recorded on the disk-shaped recording medium;
magnets;
a base including:
a support shaft that protrudes toward an optical axis direction of the objective lens; and
at least a pair of magnet attachment parts to which the magnets are attached; and
a movable unit including:
a holder part that holds the objective lens;
a supported part by which the movable unit is supported on the support shaft rotatably about and slidably along the support shaft;
a focusing coil to which a driving electric current is supplied during a focusing adjustment of the laser light;
a tracking coil to which a driving electric current is supplied during a tracking adjustment of the laser light; and
a magnetic member formed in a linear shape for holding the movable unit in a neutral position in a focusing direction and in a tracking direction by being attracted to the magnets.

2. The objective lens drive device according to claim 1, wherein said magnetic member includes:
a base part;
a pair of spring parts connected to two ends of the base part and being elastically brought into contact with two side surface parts of the movable units respectively;
a pair of supported parts connected respectively to the pair of spring parts and supported respectively on two side surface parts of the movable unit; and
a pair of magnet-facing parts connected respectively to the pair of supported parts and arranged so as to face the magnets.

3. The objective lens drive device according to claim 1, wherein said magnetic member is arranged so that the movable unit is subjected at all times to rotational torque in an orientation that tilts the movable unit toward one direction with respect to the support shaft.

4. The objective lens drive device according to claim 1, wherein said magnets are single-pole magnetized.

5. The objective lens drive device according to claim 1, wherein said movable unit having a pair of said magnetic members arranged on opposite sides of the support shaft positioned therebetween.

6. A disk device comprising:
a disk table on which a disk-shaped recording medium is mounted;
a drive motor for rotating the disk-shaped recording medium;
an objective lens through which laser light is transmitted onto a recording surface of the disk-shaped recording medium to read and play information recorded on the disk-shaped recording medium; and
an objective lens drive device holding the objective lens, said objective lens drive device comprises:
magnets;
a base including:
a support shaft that protrudes toward an optical axis direction of the objective lens; and
at least a pair of magnet attachment parts to which the magnets are attached; and
a movable unit including:
a holder part that holds the objective lens;
a supported part by which the movable unit is supported on the support shaft rotatably about and slidably along the support shaft;
a focusing coil to which a driving electric current is supplied during a focusing adjustment of the laser light;
a tracking coil to which a driving electric current is supplied during a tracking adjustment of the laser light; and
a magnetic member formed in a linear shape for holding the movable unit in a neutral position in a focusing direction and in a tracking direction by being attracted to the magnets.

7. The disk device according to claim 6, wherein said magnetic member includes:
a base part;
a pair of spring parts connected to two ends of the base part and being elastically brought into contact with two side surface parts of the movable units respectively;
a pair of supported parts connected respectively to the pair of spring parts and supported respectively on two side surface parts of the movable unit; and
a pair of magnet-facing parts connected respectively to the pair of supported parts and arranged so as to face the magnets.

8. The disk device according to claim 6, wherein said magnetic member is arranged so that the movable unit is subjected at all times to rotational torque in an orientation that tilts the movable unit toward one direction with respect to the support shaft.

9. The disk device according to claim 6, wherein said magnets are single-pole magnetized.

10. The disk device according to claim 6, wherein said movable unit having a pair of said magnetic members arranged on opposite sides of the support shaft positioned therebetween.

11. A disk device for at least one of recording information on and reading information from a disk-shaped recording medium by using laser light, said disk device comprising:
an objective lens through which the laser light is transmitted onto the disk-shaped recording medium;
a movable unit that holds the objective lens; and
a base that supports the movable unit, wherein
said base including:
a support shaft provided along an optical axis direction of the objective lens for supporting the movable unit; and
magnets, and
said movable unit including:
a supported part supported on the support shaft rotatably about the support shaft and slidably along the support shaft;
a first coil that generates a magnetic field for causing the movable unit to rotate in a rotational direction about the support shaft;
a second coil that generates a magnetic field for causing the movable unit to move in an axial direction slidably along the support shaft; and
a magnetic member generating a repelling force when deformed and being attached to said movable unit by means of said repelling force,
wherein said movable unit is held in a neutral position in the rotational direction if driving electric current is not supplied to the first coil and held in a neutral position in the axial direction if driving electric current is not supplied to the second coil by a force by which said magnetic member is attracted to the magnets.

12. The disk device according to claim 11, wherein said magnetic member is formed in linear shape.

13. The disk device according to claim 11, wherein
said base has a pair of said magnets arranged in positions that are symmetrical about a centerline of the support shaft, and
said magnetic member is asymmetrical with respect to a plane that is perpendicular to the support shaft and is symmetrical with respect to a plane of symmetry of the pair of magnets.

14. The disk device according to claim 11, wherein
said movable unit has a pair of said magnetic members, and
said pair of magnetic members are arranged with support shaft positioned therebetween.

15. The disk device according to claim 11, wherein said magnetic member is an elastic one.
